# EUROPÄISCHE PATENTANMELDUNG

(11) **EP 3 292 976 A1**
(43) Veröffentlichungstag der Anmeldung: **14.03.2018**
(21) Anmeldenummer: 16188479.6
(22) Anmeldetag: 13.09.2016
(51) Int. Cl.: B29C 45/18, B29C 45/00

(54) **LOKALE VERSTÄRKUNG VON SPRITZGUSSBAUTEILEN**

(71) Anmelder: HILTI Aktiengesellschaft, 9494 Schaan (LI)
(72) Erfinder: Lübkert, Ernst-Rudolf, 86899 Landsberg am Lech (DE)
(74) Vertreter: Hilti Aktiengesellschaft Corporate Intellectual Property

(57) **Zusammenfassung**

Verfahren zum Verwenden eines Spritzgusswerkzeugs zur Herstellung von Kunststoffbauteilen, insbesondere Bauteile von Werkzeugmaschinen, wobei das Spritzgusswerkzeug wenigstens eine Angussplatte, eine Einschubeinrichtung sowie eine Auswerferplatte enthält und wobei zwischen der Angussplatte und der Auswerferplatte wenigstens eine Kavität vorgesehen ist, wenn sich die Angussplatte und die Auswerferplatte in einem zusammengefügten Zustand befinden, und die Auswerferplatte wenigstens einen Faserkanal enthält, durch den mit Hilfe der Einschubeinrichtung zumindest ein Faserbündel mit einer thermoplastischen Matrix entlang wenigstens eines Teils der Angussplatte zu der Kavität transportierbar ist.

Das Verfahren kennzeichnet sich durch
- Zusammenführen der Angussplatte und der Auswerferplatte,
- Erwärmen des wenigstens einen Faserbündels zusammen mit der thermoplastischen Matrix,
- Positionieren des wenigstens einen Faserbündels an der Kavität mit Hilfe der Einschubeinrichtung,
- Einleiten eines flüssigen Kunststoffs in die Kavität durch wenigstens einen Kanal der Angussplatte, und
- Einleiten des wenigstens einen Faserbündels in die Kavität, sodass das Faserbündel durch den Strom des flüssigen Kunststoffs in der Kavität positioniert wird.

## Beschreibung

Die vorliegende Erfindung betrifft ein Verfahren zum Verwenden eines Spritzgusswerkzeugs zur Herstellung von Kunststoffbauteilen, insbesondere Bauteile von Werkzeugmaschinen, wobei das Spritzgusswerkzeug wenigstens eine Angussplatte, eine Einschubeinrichtung sowie eine Auswerferplatte enthält und wobei zwischen der Angussplatte und der Auswerferplatte wenigstens eine Kavität vorgesehen ist, wenn sich die Angussplatte und die Auswerferplatte in einem zusammengefügten Zustand befinden, und die Auswerferplatte wenigstens einen Faserkanal enthält, durch den mit Hilfe der Einschubeinrichtung zumindest ein Faserbündel mit einer thermoplastischen Matrix entlang wenigstens eines Teils der Angussplatte zu der Kavität transportierbar ist.

Des Weiteren betrifft die Erfindung ein Spritzgusswerkzeug zur Anwendung des Verfahrens. Darüber hinaus betrifft die Erfindung Kunststoffbauteile, insbesondere Bauteile von Werkzeugmaschinen, hergestellt in dem Verfahren.

Bauteile aus Kunststoff, z.B. Polyamid, und insbesondere Bauteile, die durch ein Spritzgussverfahren hergestellt sind, weisen keine besonders hohe Bruchfestigkeit auf. So besteht beispielsweise ein Problem darin, dass ein in einem Spritzgussverfahren hergestelltes Gehäusebauteil aus Kunststoff, z.B. ein Gehäuse für eine Werkzeugmaschine, an verschiedenen Stellen brechen kann, wenn dieses aus einer gewissen Höhe auf einen harten Untergrund aufschlägt. Ein derartiges Aufschlagen kann beispielsweis in Folge eines Sturzes, beispielsweise von einem Baugerüst, geschehen. Unter Umständen kann ein Teil des Gehäuses oder das gesamte Gehäuse einer Werkzeugmaschine nach einem Sturz so stark beschädigt sein, dass ein Austauschen des beschädigten Gehäusebauteils oder aber des gesamten Gehäuses notwendig ist.

**Aufgabe** der vorliegenden Erfindung ist es daher, das vorstehend genannte Problem zu lösen und insbesondere ein Verfahren zur Verfügung zu stellen, mit dem die Möglichkeit zum Beschädigen eines in einem Spritzgussverfahren hergestellten Bauteils, insbesondere eines Gehäuses einer Werkzeugmaschine, vermindert werden kann. Des Weiteren besteht die Aufgabe darin, ein Spritzgusswerkzeug zur Verwendung in dem erfindungsgemäßen Verfahren bereitzustellen.

Die Aufgabe wird gelöst durch den Gegenstand des unabhängigen Anspruchs 1 und 2. Vorteilhafte Ausführungsformen des erfindungsgemäßen Gegenstands sind in den abhängigen Ansprüchen enthalten.

Die Aufgabe wird dabei gelöst durch das Bereitstellen eines Verfahrens zum Verwenden eines Spritzgusswerkzeugs zur Herstellung von Kunststoffbauteilen, insbesondere Bauteile von Werkzeugmaschinen, wobei das Spritzgusswerkzeug wenigstens eine Angussplatte, eine Einschubeinrichtung sowie eine Auswerferplatte enthält und wobei zwischen der Angussplatte und der Auswerferplatte wenigstens eine Kavität vorgesehen ist, wenn sich die Angussplatte und die Auswerferplatte in einem zusammengefügten Zustand befinden, und die Auswerferplatte wenigstens einen Faserkanal enthält, durch den mit Hilfe der Einschubeinrichtung zumindest ein Faserbündel mit einer thermoplastischen Matrix entlang wenigstens eines Teils der Angussplatte zu der Kavität transportierbar ist.

Erfindungsgemäß sind folgende Schritte für das Verfahren vorgesehen:
- Zusammenführen der Angussplatte und der Auswerferplatte,
- Erwärmen des wenigstens einen Faserbündels zusammen mit der thermoplastischen Matrix,
- Positionieren des wenigstens einen Faserbündels an der Kavität mit Hilfe der Einschubeinrichtung,
- Einleiten eines flüssigen Kunststoffs in die Kavität durch wenigstens einen Kanal der Angussplatte, und
- Einleiten des wenigstens einen Faserbündels in die Kavität, sodass das Faserbündel durch den Strom des flüssigen Kunststoffs in der Kavität positioniert wird.

Hierdurch kann sichergestellt werden, dass ein in einem Spritzgussverfahren hergestelltes Bauteil, lokal durch das Einführen von Fasern an bestimmten Stellen, an denen das Bauteil hohen mechanischen Kräften ausgesetzt ist, verstärkt wird. Durch den Einsatz der Fasern kann somit der im Spritzgussverfahren verwendete Kunststoff lokal oder auch gesamtheitlich verstärkt werden.

Des Weiteren wird die Aufgabe gelöst durch das Bereitstellen eines Spritzgusswerkzeugs zur Anwendung des Verfahrens.

Darüber hinaus wird die Aufgabe gelöst durch Kunststoffbauteile, insbesondere Bauteile von Werkzeugmaschinen, hergestellt in dem Verfahren.

Erfindungsgemäß ist vorgesehen, dass das Spritzgusswerkzeug wenigstens eine Angussplatte sowie eine Auswerferplatte enthält und wobei zwischen der Angussplatte und der Auswerferplatte wenigstens eine Kavität vorgesehen ist, wenn sich die Angussplatte und die Auswerferplatte in einem zusammengefügten Zustand befinden, und die Auswerferplatte wenigstens einen Faserkanal enthält, durch den zumindest ein Faserbündel entlang wenigstens eines Teils der Angussplatte zu der Kavität transportierbar ist. Hierdurch kann sichergestellt werden, dass ein mit dem Spritzgusswerkzeug hergestelltes Bauteil, lokal durch das Einführen von Fasern an bestimmten Stellen, an denen das Bauteil hohen mechanischen Kräften ausgesetzt ist, verstärkt wird. Durch den Einsatz der Fasern kann somit der im Spritzgussverfahren verwendete Kunststoff lokal oder auch gesamtheitlich verstärkt werden

Gemäß einer vorteilhaften Ausführungsform der vorliegenden Erfindung kann es möglich sein, dass eine Einschubeinrichtung mit einem zylindrischen Einschubelement vorgesehen ist, wobei die Querschnittsfläche des Einschubelements im Wesentlichen einer Querschnittsfläche des Faserkanals entspricht, sodass das Einschubelement in dem Faserkanal reversibel bewegbar ist und ein in dem Faserkanal befindliches Faserbündel von dem Einschubelement durch den Faserkanal und in die Kavität transportierbar ist. Hierdurch kann das Einführen des Faserbündels in die Kavität bzw. zu dem flüssigen Kunststoff in der Kavität effektiv gesteuert und der Zeitpunkt, ab dem das Faserbündel in die Kavität bzw. in den flüssigen Kunststoff gebracht wird, variiert werden. Durch das gezielte bzw. vorbestimmte Einleiten des Faserbündels in den flüssigen Kunststoff kann auch die finale Position des Faserbündels in der Kavität bzw. in dem flüssigen Kunststoff bestimmt werden.

Entsprechend einer weiteren vorteilhaften Ausführungsform der vorliegenden Erfindung kann es möglich sein, dass die Auswerferplatte wenigstens ein Trägerelement mit einer Durchgangsbohrung zur Aufnahme wenigstens eines Faserbündels enthält, wobei das Trägerelement zusammen mit dem Faserbündel in der Durchgangsbohrung so in die Auswerferplatte einführbar ist, dass das Faserbündel in dem Faserkanal positioniert ist, wobei das Trägerelement wenigstens ein Heizelement zum Erwärmen eines in dem Trägerelement positionierten Faserbündels enthält. Hierdurch kann ein in dem Trägerelement positioniertes Faserbündel für eine bessere Verarbeitung erhitzt sowie auf einfache Art und Weise in dem Faserkanal positioniert werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: eine Seitenansicht einer Spritzgussmaschine mit einem Spritzgusswerkzeug;
- Fig. 2a: eine Auswerferplatte eines Spritzgusswerkzeugs mit einem Zentrierflansch und einem Trägerelement;
- Fig. 2b: eine Schnittansicht entlang der Schnittlinie A-A in Fig. 2a des Spritzgusswerkzeugs mit der Auswerferplatte, einer ersten Aufspannplatte, dem Trägerelement, einer Einschubeinrichtung, einer Angussplatte und einer zweiten Aufspannplatte in einem zusammengefügten Zustand;
- Fig. 3: eine Schnittansicht auf eine Durchgangsbohrung des Trägerelements mit einem Faserbündel;
- Fig. 4: eine Schnittansicht entlang der Schnittlinie A-A in Fig. 2a des Spritzgusswerkzeugs mit der Auswerferplatte, dem Trägerelement, der Einschubeinrichtung, der Angussplatte und dem Faserbündel in einem zusammengefügten Zustand;
- Fig. 5: eine Schnittansicht des Trägerelements mit einem Heizelement, des Faserbündels mit einer thermoplastischen Matrix, der Auswerferplatte und eines Einschubelements der Einschubeinrichtung;
- Fig. 6: eine Schnittansicht entlang der Schnittlinie A-A in Fig. 2a des Spritzgusswerkzeugs mit der Auswerferplatte, dem Trägerelement, der Einschubeinrichtung, der Angussplatte, dem Faserbündel und dem flüssigen Kunststoff in einem zusammengefügten Zustand;
- Fig. 7: eine Schnittansicht auf die Kavität, einen Teil Auswerferplatte, einen Teil des Trägerelements, einen Teil des Einschubelements, das Faserbündel, des flüssigen Kunststoffs und einen Teil der Angussplatte, wobei die Kavität ungefähr zur Hälfte mit dem flüssigen Kunststoff gefüllt ist;
- Fig. 8: eine Schnittansicht entlang der Schnittlinie A-A in Fig. 2a der Spritzgussmaschine mit der Auswerferplatte, dem Trägerelement, der Einschubeinrichtung, der Angussplatte, dem Faserbündel und dem flüssigen Kunststoff in einem zusammengefügten Zustand, wobei die Kavität ungefähr zur Hälfte mit dem flüssigen Kunststoff gefüllt ist;

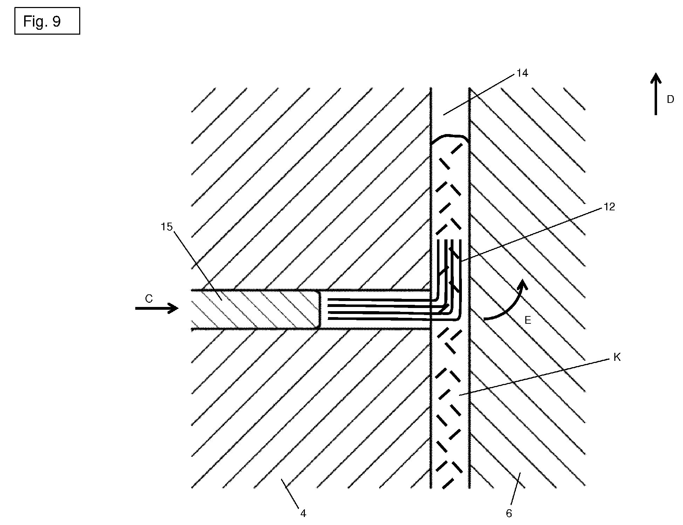

- Fig.9: eine Detailansicht auf einen Teil der Auswerferplatte, einen Teil des Einschubelements, das Faserbündel, einen Teil des flüssigen Kunststoffs und einen Teil der Angussplatte, wobei die Kavität ungefähr zur Hälfte mit dem flüssigen Kunststoff gefüllt ist;
- Fig. 10: eine Schnittansicht entlang der Schnittlinie A-A in Fig. 2a des Werkzeugs mit der Auswerferplatte, dem Trägerelement, der Einschubeinrichtung, der Angussplatte, dem Faserbündel und dem flüssigen Kunststoff in einem zusammengefügten Zustand;
- Fig. 11: eine Detailansicht auf einen Teil der Auswerferplatte, einen Teil des Einschubelements, das Faserbündel, einen Teil des flüssigen Kunststoffs und einen Teil der Angussplatte; und
- Fig. 12: eine Schnittansicht entlang der Schnittlinie A-A in Fig. 2a des Werkzeugs mit der Auswerferplatte, dem Trägerelement, der Einschubeinrichtung, der Angussplatte, dem Faserbündel und dem ausgehärteten Kunststoff in einem geöffneten Zustand.

### Ausführungsbeispiele:

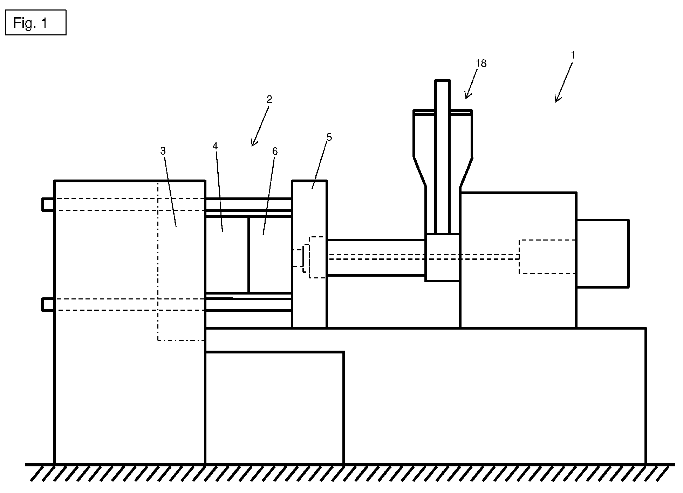

Fig. 1 zeigt eine Spritzgussmaschine 1 mit einem Spritzgusswerkzeug 2. Das Spritzgusswerkzeug 2 enthält im Wesentlichen eine erste Aufspannplatte 3 mit einer Auswerferplatte 4, eine zweite Aufspannplatte 5 mit einer Angussplatte 6, eine Einschubeinrichtung 7 und ein Trägerelement 8.

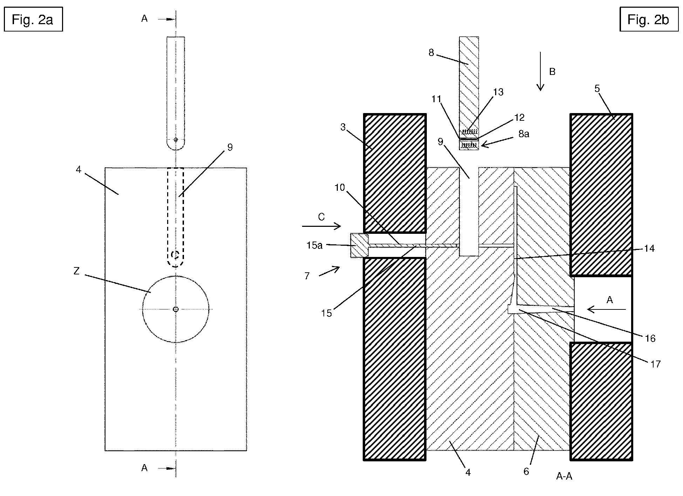

Fig. 2a und 2b zeigen eine schematische Darstellung des Spritzgusswerkzeugs 2 zur Herstellung von Kunststoffbauteilen.

Das Spritzgusswerkzeug 2 kann auch als Werkzeug für eine Spritzgussmaschine bezeichnet werden. Bei den Kunststoffbauteilen kann es sich um Bauteile, wie z.B. Gehäusekomponenten von Werkzeugmaschinen, handeln.

Die Auswerferplatte 4, wie in 2b gezeigt, ist im Wesentlichen als rechteckiger Block ausgebildet und enthält eine Einschuböffnung 9 und einen Faserkanal 10. In Fig. 2a ist die Angussplatte 6 mit einem Zentrierflansch Z gezeigt.

Die Einschuböffnung 9 ist im Wesentlichen rechteckig ausgestaltet und erstreckt sich in Richtung B in der Auswerferplatte 4. In die Einschuböffnung 9 kann das Trägerelement 8 eingeführt werden. Das Trägerelement 8 weist eine gewisse Spielpassung auf, wenn es sich in der Einschuböffnung 9 befindet.

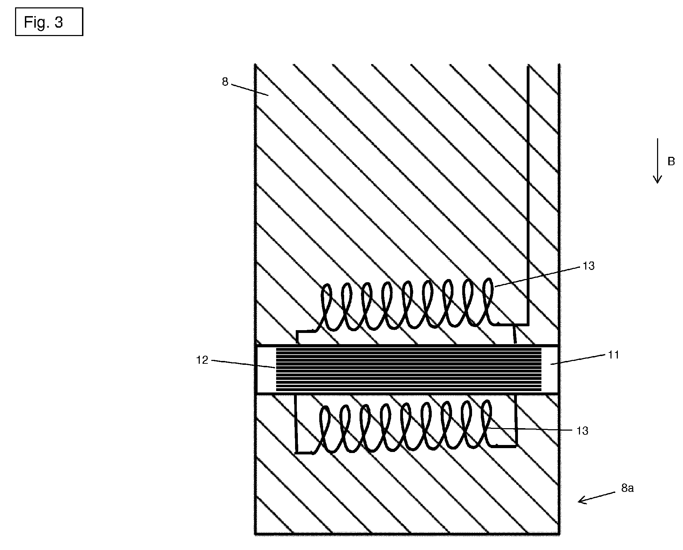

Das Trägerelement 8 ist im Wesentlichen als rechteckiger Block ausgestaltet. An einem vorderen Ende 8a enthält das Trägerelement 8 eine Durchgangsbohrung 11 zur Aufnahme wenigstens eines Faserbündels 12. Um die Durchgangsbohrung 11 herum sind Heizelemente 13 in Form eines Heizdrahtes positioniert (vgl. Fig. 3). Die Heizelemente 13 dienen zum Erwärmen bzw. Erhitzen des Faserbündels 12 in der Durchgangsbohrung 11. Der Durchmesser der Durchgangsbohrung 11 ist kreisrund und beträgt 2 bis 3 mm. Die Durchgangsbohrung 11 ist in Richtung C ca. 22 mm lang. In dem gezeigten Ausführungsbeispiel hat die Durchgangsbohrung 11 einen kreisrunden Durchmesser von 2,5 mm. Bei dem Faserbündel 12 handelt es sich um ein Bündel aus Kohlenstofffasern mit einer thermoplastischen Matrix. Jede Faser des Faserbündels 12 ist ca. 20 mm lang. Die Faser des Faserbündels 12 ist dabei ungefähr 5 bis 10% kürzer als die Länge der Durchgangsbohrung 11. Der Durchmesser des Faserbündels 12 ist kreisrund, beträgt ca. 2 bis 3 mm und ist an den Durchmesser der Durchgangsbohrung 11 angepasst. Mit anderen Worten: der Durchmesser des Faserbündels 12 ist stets kleiner als der Durchmesser der Durchgangsbohrung 11. Der Durchmesser des Faserbündels 12 muss jedoch nicht zwangsläufig kreisrund sein, sondern kann auch einen rechteckigen bzw. quadratischen Durchmesser aufweisen. Es ist jedoch auch möglich, dass ein anderer Werkstoff als Kohlenstoff verwendet wird, wie z.B. Glas oder Aramide. Darüber hinaus ist es auch möglich, dass die Fasern länger oder auch kürzer als 22 mm sind. Wie in Fig. 2b gezeigt erstreckt sich die Durchgangsöffnung 11 in Richtung A durch das Trägerelement 8.

Der Faserkanal 10 erstreckt sich entlang der gesamten Breite der Auswerferplatte 4 und entgegen der Richtung A. Der zylindrische Faserkanal 10 dient dazu, ein Faserbündel 12 durch die Auswerferplatte 4 und bis zu einer Kavität 14 zu bringen. Die Kavität 14 befindet sich zwischen der Auswerferplatte 4 und der Angussplatte 6, wenn sich die Auswerferplatte 4 und die Angussplatte 6 in einem zusammengefügten Zustand befinden (vgl. Fig. 2b).

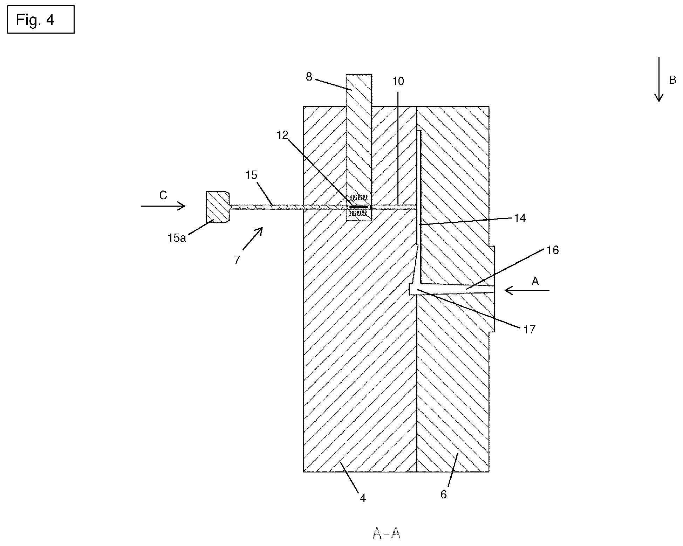

Die Einschuböffnung 9 und der Faserkanal 10 kreuzen sich so, dass sich die Durchgangsbohrung 11 des Trägerelements 8 in einer Flucht mit dem Faserkanal 10 bzw. die Durchgangsbohrung 11 in der Mitte der Querschnittsfläche des Faserkanals 10 befindet, wenn sich das Trägerelement 8 bis zum Anschlag in der Einschuböffnung 9 befindet (vgl. Fig. 4).

Die Einschubeinrichtung 7 enthält ein zylindrisches Einschubelement 15. Das Einschubelement 15 kann auch als Stift bezeichnet werden. An einem freien Ende des Einschubelements 15 befindet sich ein Anschlag 15a. Die Querschnittsfläche des Einschubelements 15 entspricht im Wesentlichen einer Querschnittsfläche des Faserkanals 10, sodass das Einschubelement 15 in dem Faserkanal 10 reversibel bewegbar ist und ein in dem Faserkanal 10 befindliches Faserbündel 12 von dem Einschubelement 15 durch den Faserkanal 10 und in die Kavität 14 transportierbar ist.

Die Angussplatte 6 ist im Wesentlichen als rechteckiger Block ausgebildet und enthält einen Angusskanal 16 sowie eine Kavitätsaussparung 17. Des Weiteren ist der Zentrierflansch Z an einer Seite der Angussplatte 6 vorgesehen. Der Zentrierflansch Z dient dazu die Angussplatte 6 in einer bestimmten Ausrichtung und Anordnung zur Spritzgussmaschine 1 zu positionieren. Durch den Angusskanal 16 kann flüssiger Kunststoff durch die Angussplatte 16 zu der Kavitätsaussparung 17 und damit zu der Kavität 14, die sich zwischen der Auswerferplatte 4 und der Angussplatte 6 in einem zusammengefügten Zustand befindet, gelangen.

### Spritzgussverfahren:

Für den Herstellungsprozess von Bauteilen in dem Spritzgussverfahren werden zunächst die Auswerferplatte 4 und die Angussplatte 6 so zusammengebracht, dass sich die Kavität 14 zwischen der Auswerferplatte 4 und Angussplatte 6 bildet. Die Auswerferplatte 4 wird dazu in Richtung C bewegt (vgl. Fig. 2a und 2b).

Das Trägerelement 8 befindet sich entgegen der Richtung B außerhalb der Einschuböffnung. In die Durchgangsbohrung 11 des Trägerelements 8 wird ein Faserbündel 12 positioniert (vgl. Fig. 3). Die Fasern des Faserbündels 12 sind leicht gewellt und nicht komplett gestreckt, wenn sich die Fasern in der Durchgangsbohrung 11 des Trägerelements 8 befinden.

Das Einschubelement 15 befindet sich so weit in Richtung A, dass das Einschubelement 15 nicht in die Einschuböffnung 9 ragt.

Mit Hilfe der Heizelemente 13 wird das Faserbündel 12 in dem Trägerelement 8 erwärmt bzw. erhitzt.

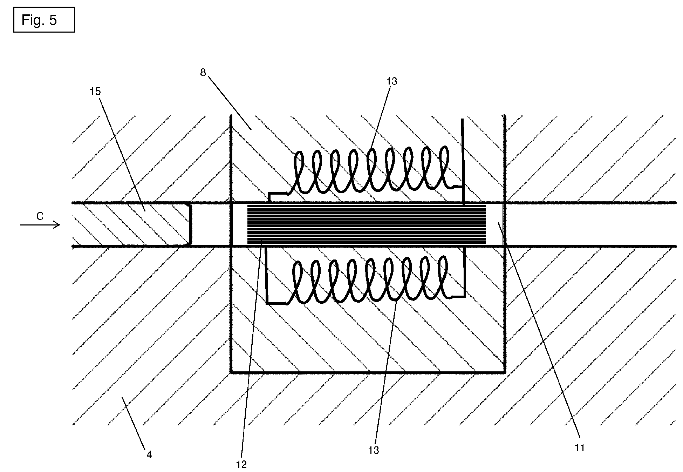

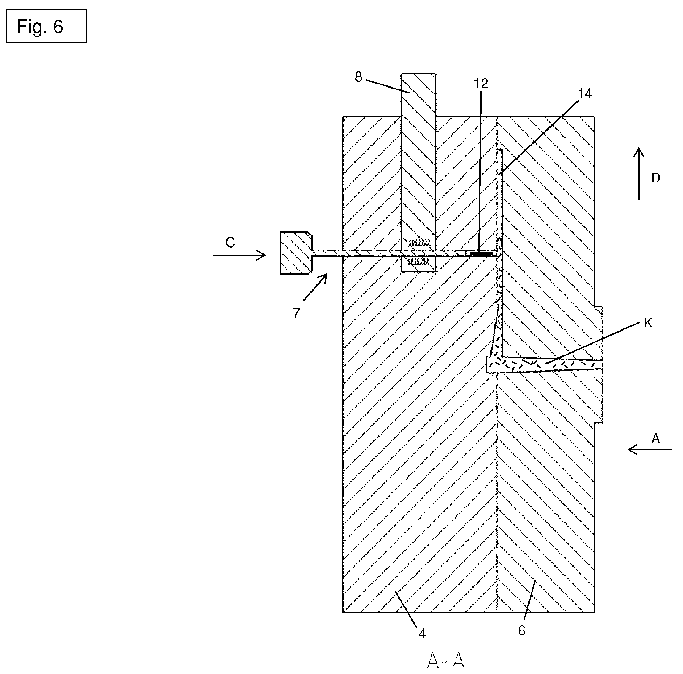

Als nächstes wird das Trägerelement 8 zusammen mit dem Faserbündel 12 in der Durchgangsbohrung 11 bis zum Anschlag in die Einschuböffnung 9 geschoben, sodass das Faserbündel 12 in der Durchgangsbohrung 11 in der Mitte des Faserkanals 10 positioniert ist (vgl. Fig. 4). Der flüssige Kunststoff K wird jedoch erst in den Angusskanal 16 eingeführt, wenn sich das Faserbündel 12 an der Kavität 14 befindet (vgl. Fig. 6). Der Kunststoff K wird erwärmt, um flüssig zu sein. Die Vorrichtung 18 zum Einführen des flüssigen Kunststoffs ist in Figur 1 gezeigt. Das Einschubelement 8 wird in Richtung C bewegt, sodass das Ende 8a des Einschubelements 8 schließlich an dem Faserbündel 12 anliegt (vgl. Fig. 4 und 5).

Wie in Fig. 6 gezeigt, wird das Faserbündel 12 entlang dem Faserkanal 10 in Richtung C zu der Kavität 14 geschoben. Der flüssige Kunststoff K hat nun die Kavität 14 zur Hälfte gefüllt. Der flüssige Kunststoff K strömt weiter in Richtung A und in Richtung D. Je nach dem wo die Fasern des Faserbündels 12 schließlich in dem Kunststoff K positioniert sein sollen, verändert sich der Zeitpunkt des Einfließens des flüssigen Kunststoffs K. Um die Fasern weiter vorn in Richtung C in dem Kunststoff K des Bauteils zu positionieren, werden die Fasern bereits in die Kavität 14 gebracht, wenn sich noch wenig flüssiger Kunststoff K in der Kavität 14 befindet. Um die Fasern weiter hinten entgegen der Richtung C in dem Kunststoff K des Bauteils zu positionieren, werden die Fasern erst in die Kavität 14 gebracht, wenn sich schon mehr flüssiger Kunststoff K in der Kavität 14 befindet.

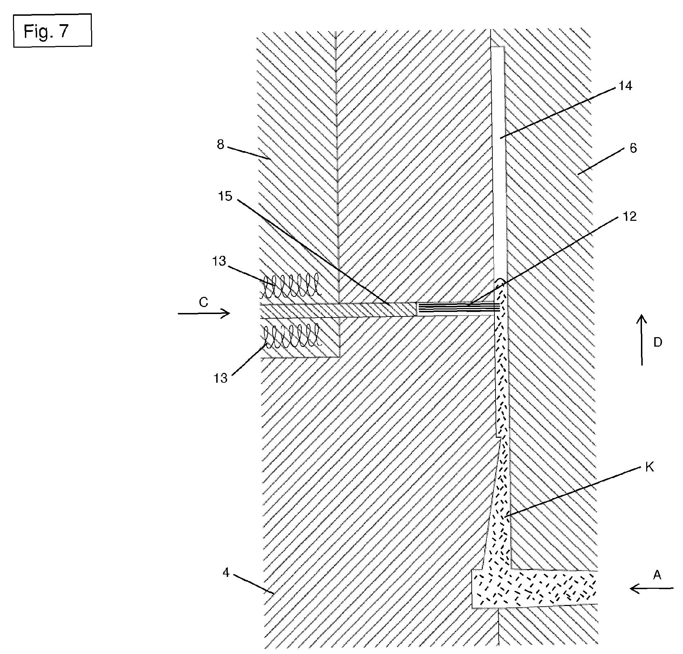

Wie in Fig. 7 dargestellt treffen schließlich die Enden der Fasern auf den flüssigen Kunststoff K in der Kavität 14, wobei sich der flüssige Kunststoff K weiter in Richtung A und D bewegt. Das Einschubelement 8 drückt das Faserbündel 12 weiter in Richtung C.

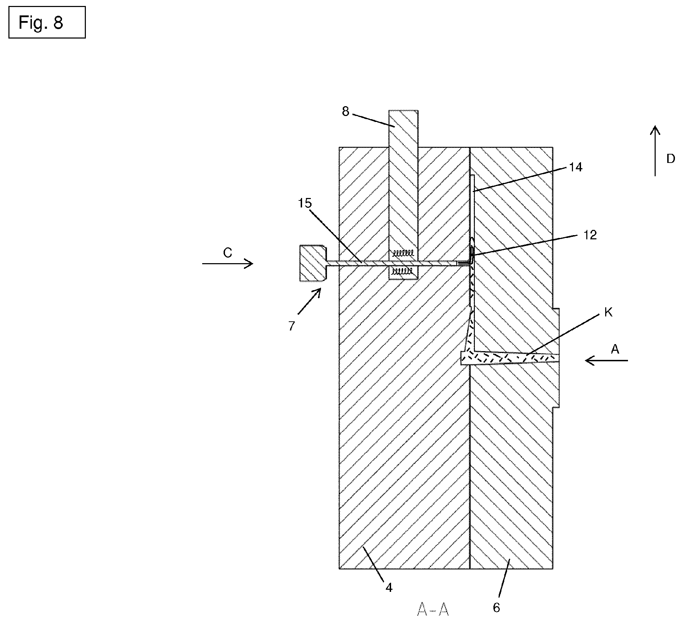

Die einzelnen Fasern des Faserbündels 12 werden schließlich von dem flüssigen Kunststoff K mitgezogen, wenn sich der flüssige Kunststoff K weiter in Richtung D und die Fasern in einem Bogen Richtung E bewegen. Das Einschubelement 8 bewegt sich weiterhin in Richtung C (vgl. Fig. 8).

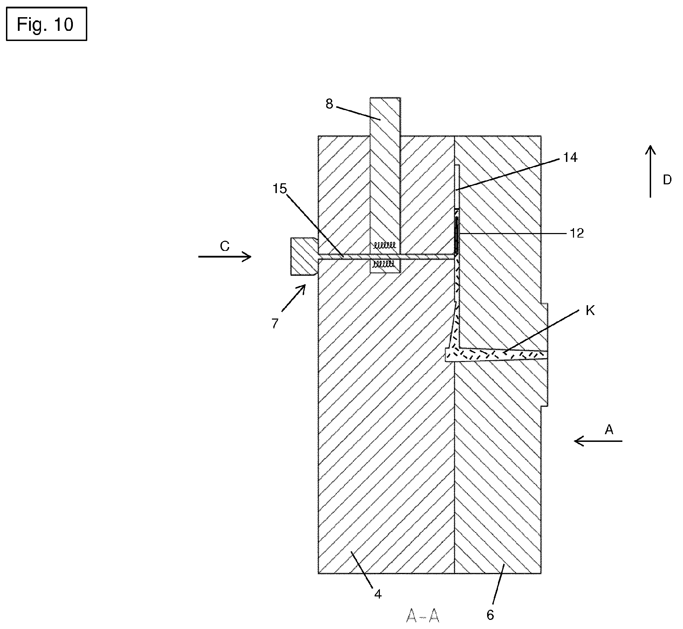

Schließlich sind die Fasern des Faserbündels 12 vollständig von dem flüssigen Kunststoff K erfasst und in die Kavität 14 gezogen worden. Der flüssige Kunststoff K bewegt sich weiterhin in Richtung A und D. Durch den weiterhin fließenden bzw. strömenden flüssigen Kunststoff K werden die Fasern des Faserbündels 12 in dem flüssigen Kunststoff K positioniert. Das Einschubelement 8 ist nun vollständig, d.h. bis der Anschlag an die Auswerferplatte 4 angrenzt, in dem Faserkanal 10 eingeführt (vgl. Fig. 10). Es ist jedoch auch möglich, dass die Fasern des Faserbündels 12 flüssigen Kunststoff K in der Kavität 14 verdrängen und sich so in einen Bereich der Kavität 14 bewegen, in dem noch kein flüssiger Kunststoff K vorhanden ist.

Es ist des Weiteren auch möglich, dass das Faserbündel 12 erst dann in die Kavität 14 eingeschoben wird, wenn die Kavität 14 fast vollständig mit dem flüssigen Kunststoff K gefüllt ist und nur noch das Volumen des Faserbündels 12 zur vollständigen Füllung der Kavität 14 in die Kavität 14 eingeschoben werden kann. Das Restvolumen der Kavität 14 bis zur vollständigen Füllung entspricht dabei dem Volumen des Faserbündels 12.

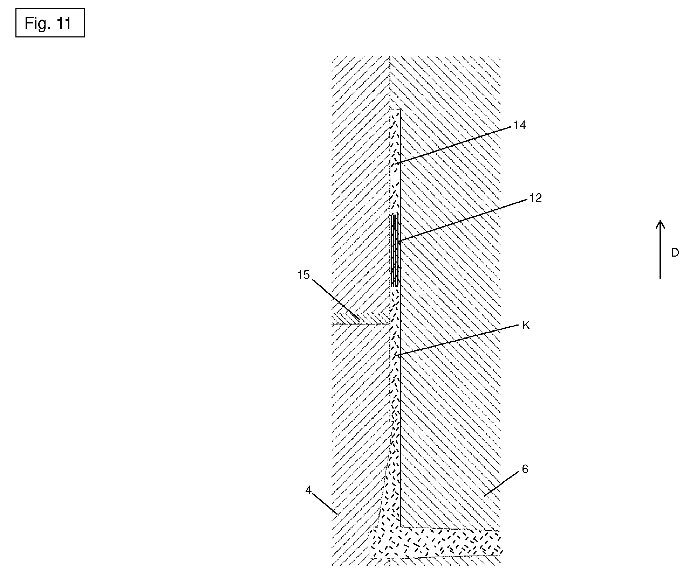

Wenn der flüssige Kunststoff K die Kavität 14 vollständig ausfüllt, bewegt sich der Kunststoff K nicht mehr und die Fasern sind an der Endposition angelangt (vgl. Fig. 11). Um die Endposition der Fasern zu steuern, kann die Position des Faserkanals 10 in der Auswerferplatte 4 variiert werden. Darüber hinaus ist es auch möglich, dass der Zeitpunkt ab wann das Einschubelement 8 das Faserbündel 12 durch den Faserkanal 10 zu der Kavität 14 schiebt, die Geschwindigkeit des Faserbündels 12 in dem Faserkanal 10 und/oder des flüssigen Kunststoffs K in der Kavität 14 oder der Durchmesser des Faserbündels 12 variiert wird.

Es ist zu beachten, dass die Fasern nicht vollständig gestreckt sind, wenn sich diese in dem flüssigen Kunststoff K und in der Endposition befinden.

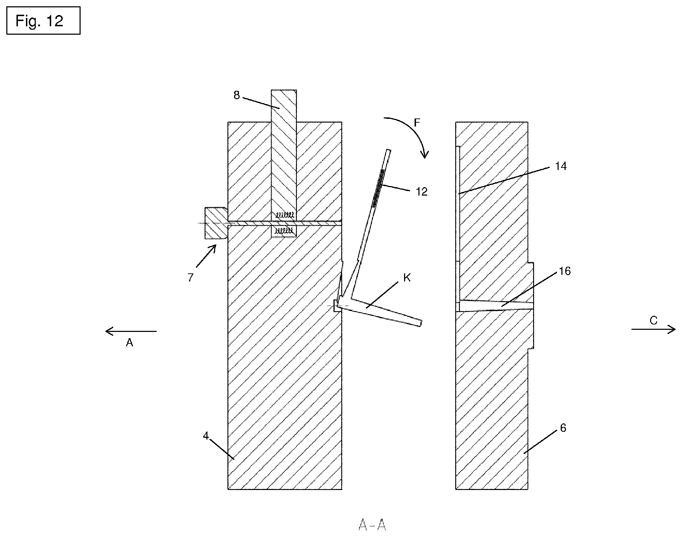

Nachdem der Kunststoff K abgekühlt und ausgehärtet ist, werden die Auswerferplatte 4 und die Angussplatte 6 wieder voneinander getrennt. Hierzu wird die Auswerferplatte 4 in Richtung A bewegt. Die Kavität 14 zwischen der Auswerferplatte 4 und der Angussplatte 6 wird freigelegt und das im Spritzgussverfahren hergestellt Bauteil kann durch Schwenken in Richtung F und Ziehen in Richtung C aus der Auswerferplatte 4 genommen werden (vgl. Fig. 12).

## Patentansprüche

1. Verfahren zum Verwenden eines Spritzgusswerkzeugs (2) zur Herstellung von Kunststoffbauteilen, insbesondere Bauteile von Werkzeugmaschinen, wobei das Spritzgusswerkzeug (2) wenigstens eine Angussplatte (6), eine Einschubeinrichtung (8) sowie eine Auswerferplatte (4) enthält und wobei zwischen der Angussplatte (6) und der Auswerferplatte (4) wenigstens eine Kavität (14) vorgesehen ist, wenn sich die Angussplatte (6) und die Auswerferplatte (4) in einem zusammengefügten Zustand befinden, und die Auswerferplatte (4) wenigstens einen Faserkanal (10) enthält, durch den mit Hilfe der Einschubeinrichtung (8) zumindest ein Faserbündel (12) mit einer thermoplastischen Matrix entlang wenigstens eines Teils der Angussplatte (6) zu der Kavität (14) transportierbar ist,
gekennzeichnet mit den Verfahrensschritten,
- Zusammenführen der Angussplatte (6) und der Auswerferplatte (4),
- Erwärmen des wenigstens einen Faserbündels (12) zusammen mit der thermoplastischen Matrix,
- Positionieren des wenigstens einen Faserbündels (12) an der Kavität (14) mit Hilfe der Einschubeinrichtung (7),
- Einleiten eines flüssigen Kunststoffs (K) in die Kavität (14) durch wenigstens einen Angusskanal (16) der Angussplatte (6), und
- Einleiten des wenigstens einen Faserbündels (12) in die Kavität (14), sodass das Faserbündel (12) durch den Strom des flüssigen Kunststoffs (K) in der Kavität (14) positioniert wird.

2. Spritzgusswerkzeug (2) zur Anwendung des Verfahrens nach Anspruch 1,
**dadurch gekennzeichnet, dass** das Spritzgusswerkzeug (2) wenigstens eine Angussplatte (6) sowie eine Auswerferplatte (4) enthält und wobei zwischen der Angussplatte (6) und der Auswerferplatte (4) wenigstens eine Kavität (14) vorgesehen ist, wenn sich die Angussplatte (6) und die Auswerferplatte (4) in einem zusammengefügten Zustand befinden, und die Auswerferplatte (4) wenigstens einen Faserkanal (10) enthält, durch den zumindest ein Faserbündel (12) entlang wenigstens eines Teils der Angussplatte (6) zu der Kavität (14) transportierbar ist.

3. Spritzgusswerkzeug (2) nach Anspruch 3,
**dadurch gekennzeichnet, dass** eine Einschubeinrichtung (7) mit einem zylindrischen Einschubelement (15) vorgesehen ist, wobei die Querschnittsfläche des Einschubelements (15) im Wesentlichen einer Querschnittsfläche des Faserkanals (10) entspricht, sodass das Einschubelement (15) in dem Faserkanal (10) reversibel bewegbar ist und ein in dem Faserkanal (10) befindliches Faserbündel (12) von dem Einschubelement (15) durch den Faserkanal (10) und in die Kavität (14) transportierbar ist.

4. Spritzgusswerkzeug (2) nach Anspruch 2 oder 3,
**dadurch gekennzeichnet, dass** die Auswerferplatte (4) wenigstens ein Trägerelement (8) mit einer Durchgangsbohrung (11) zur Aufnahme wenigstens eines Faserbündels (12) enthält, wobei das Trägerelement (8) zusammen mit dem Faserbündel (12) in der Durchgangsbohrung (11) so in die Auswerferplatte (4) einführbar ist, dass das Faserbündel (12) in dem Faserkanal (10) positioniert ist, wobei das Trägerelement (8) wenigstens ein Heizelement (13) zum Erwärmen eines in dem Trägerelement (8) positionierten Faserbündels (12) enthält.

5. Kunststoffbauteile, insbesondere Bauteile von Werkzeugmaschinen, hergestellt in dem Verfahren nach Anspruch 1.
